# EUROPEAN PATENT APPLICATION

(11) **EP 4 826 244 A2**
(43) Date of publication of application: **21.10.2026**
(21) Application number: 26198529.5
(22) Date of filing: 13.08.2026
(51) Int. Cl.: F03D 15/00, F03D 1/00, F03D 13/20

(54) **A WIND TURBINE**

(30) Priority: 26.02.2026 LV 260010
(71) Applicant: Dreimanis, Dainis, 1055 Riga (LV); Villadsen, Linda, 2300 Copenhagen (DK); Pupola, Inga, 1083 Riga (LV)
(72) Inventor: DREIMANIS, Dainis, LV-1055 Riga (LV)
(74) Representative: Kromanis, Artis

(57) **Abstract**

The present invention is a wind turbine comprising a tower (1) supporting a rotor (2) on a horizontal shaft (4) coupled to a bevel gear box (5) that transfers rotation to a vertical shaft (6) driving an electric generator (7) positioned at or below the base of the tower (1). This configuration reduces nacelle mass, improves stability, and facilitates maintenance. The wind turbine comprises a yaw unit (10) including a base disc (11), a rotatable top disc (12) supported by rollers (13), and a top disc drive unit (15) driven by a power transmission unit (16) enables controlled orientation of the rotor (2) towards the wind direction.

## Description

### Field of the invention

The present invention relates to a wind turbine, a wind turbine tower and a generator arrangement within the wind turbine.

### Background of the invention

A wind turbine known in the art comprises a tapered wind turbine tower and a wind turbine nacelle positioned on top of the tower. A wind turbine rotor with three wind turbine blades is connected to the nacelle through a low-speed shaft. Such design wind turbine is disclosed in the European patent publication No. EP2136017.

Similar wind turbine is disclosed in the US patent application publication No. US2010/0293781.

Prior art wind turbines put high structural loads on the tower structure. Large rotor diameters and heavy nacelles impose substantial bending moments on towers and foundations, requiring massive steel and concrete structures that increase cost and complexity. Gearboxes, generators, and power electronics located at elevations of 80-150 meters require specialized cranes, long downtime, and high-risk work at height, resulting in complex, hazardous and costly maintenance. Heavy turbines require deep, expensive foundations.

### Summary of the invention

The aim of the present invention is to overcome all aforementioned problems with the prior art wind turbines.

The aim is achieved by design of a wind turbine comprising a tower having braced frame structure, a rotor with blades and a horizontal shaft connected to the rotor. The tower has multiple braced frame structure sections, where a base surface of a lower braced frame structure section is bigger than a base surface of an upper braced frame structure. The wind turbine comprises a bevel gear box connected to the horizontal shaft. The wind turbine comprises a vertical shaft arranged within the tower and connected to the bevel gear box so that the rotation of the horizontal shaft is transferred to the vertical shaft. The vertical shaft may comprise multiple vertical shaft sections interconnected to each other forming one single vertical shaft. The vertical shaft sections are interconnected via shaft end connection flanges. In addition, shaft support discs are located between the shaft section end connection flanges. The wind turbine comprises an electric generator connected to the vertical shaft. The electric generator can be arranged at a base of the tower or below the base of the tower. Hence, the electric generator with all its supplementary units such as a brake, a gearbox and power electronics can be arranged at a base of the tower or below the base of the tower, fundamentally improving environmental impact.

It should be noted that the braced frame structure sections have significantly lower wind resistance surface. In result of this, the wind turbine of the present invention is less influenced by the wind.

The tower has multiple braced frame structure sections. The braced frame structure sections are designed and assembled so that a base surface of a lower braced frame structure section is bigger than a base surface of an upper braced frame structure so that a surface is left on the lower braced frame structure section around the upper braced frame structure for repairmen to walk around and service the wind turbine. Basically, the tower comprises a lower braced frame structure section, multiple middle braced frame structure sections and an upper braced frame structure section. The upper braced frame structure section is the braced frame structure section which is the uppermost from all the braced frame structure sections. The lower braced frame structure section is the braced frame structure sections that is at the base of the tower or a starting section of the tower.

Moreover, the braced frame structure section may comprise at least two interconnected subsections. Each subsection comprises at least four corner support beams. The cross-section of one corner support beam of the subsection is designed so that it is smaller than the cross-section of the one corner support beam of the subsection positioned below said subsection. It further decreases the overall load on the tower.

The tower can be assembled at a place of its use. It can be transported to the place of its use in subsections and then assembled in the sections and then in complete tower.

The wind turbine further comprises a specific yaw unit configured to orient the rotor towards a wind, i.e., a rotational axis of the rotor coincides with a wind direction. The yaw unit comprises a base disc fixed to the tower and a top disc onto which the rotor and the vertical shaft are positioned. The yaw unit multiple rollers arranged between the base disc and the top disc so that the top disc bears on the rollers and can rotate in relation the base disc. Rotation axes of the rollers are arranged orthogonal to the rotation axis of the top disc. The yaw unit comprises a top disc drive unit with a power transmission unit such as a chain or a belt. The power transmission unit is arranged around the top disc so that the power transmission unit is engaged with the top disc and the power transmission unit is also engaged with the top disc drive unit so that the top disc drive unit rotates the top disc through the movement of the power transmission unit in result of which the rotor can be oriented towards the wind. This yaw unit design provides simple yet reliable unit for orientation of the rotor towards the wind.

The wind turbine comprises a shaft support sections. The shaft support sections are arranged the braced frame structure sections connecting thereof as well as providing a support for the shaft. The shaft support device comprises at least two shaft support rollers and at least two shaft side support rollers. The shafts support rollers are arranged under the shaft support disc so that the shaft support rollers support the shaft support disc and provides rotational movement between the shaft support disc and shaft support rollers. The shaft side support rollers are arranged at the outer circumference of the shaft support disc so that the side support rollers restrict movement of the shaft support disc orthogonally to the longitudinal axis of the shaft disc.

In one embodiment of the invention the wind turbine comprises a cargo elevator arranged along the tower and outside braced frame structure of the tower. Accordingly, a construction crane will only be needed during the transport of the tower and the assembly of the sections of the tower. All maintenance and repair work can be carried out using a cargo elevator.

In one embodiment of the invention the yaw unit comprises six rollers arranged in equal distances from each other so that the load from the top disc is equally distributed onto the base disc and further to the tower.

In one embodiment of the invention the yaw unit may comprise a set of press rollers arranged above the top disc so that the press rollers press the top disc towards the base disc.

Overall, the tapered braced-frame tower and relocated major mass such as the electric generator and its support systems reduces dynamic loading, nacelle complexity, and maintenance requirements, thereby enhancing structural stability, mechanical and electrical reliability, and overall energy production while lowering lifetime costs.

### Brief description of the drawings

The drawings illustrate through examples embodiments of the invention falling within the scope of the invention as defined by the claims.
Fig. 1 illustrates a wind turbine.
Fig. 2 is a close-up view of an upper section of the wind turbine as seen in Fig. 1.
Fig. 3 is a top perspective view of a yaw unit (10).
Fig. 4 is an exploded view of the yaw unit (10) as seen in Fig. 3.
Fig. 5A illustrates a wind turbine with a generator (6) arranged in a basement (1AA).
Fig. 5B illustrates a wind turbine as seen in Fig. 5A but with a lifting platform (21) of a cargo elevator (20) in a lowered position.
Fig. 6 illustrates a first shaft support section (1AB) arranged between a first braced frame structure section (1A) and a second braced frame structure section (1B).
Fig. 7 illustrates a shaft support section (1BC) arranged between the second braced frame structure section (1B) and a third braced frame structure section (1C).
Fig. 8 illustrates a shaft support device (60) arranged on cross beams (66) of the shaft support section (1AB).

### Detailed description of the embodiments

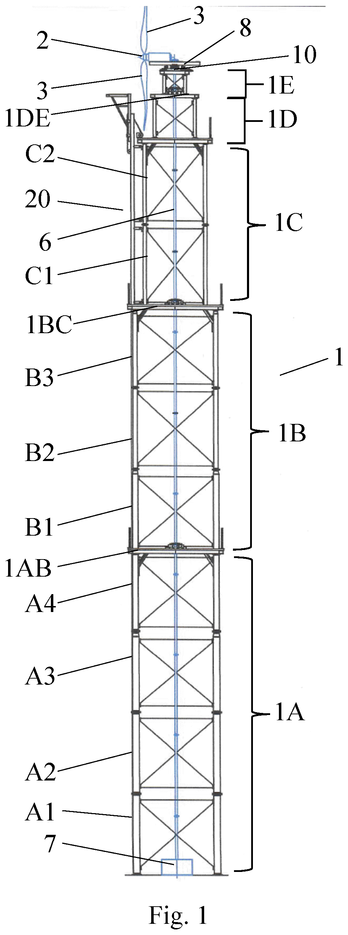

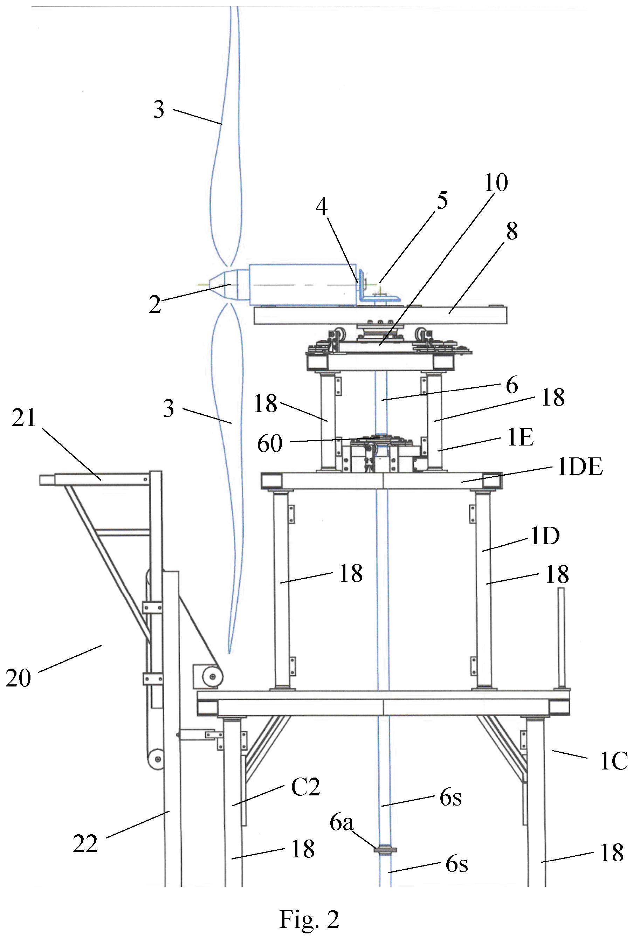

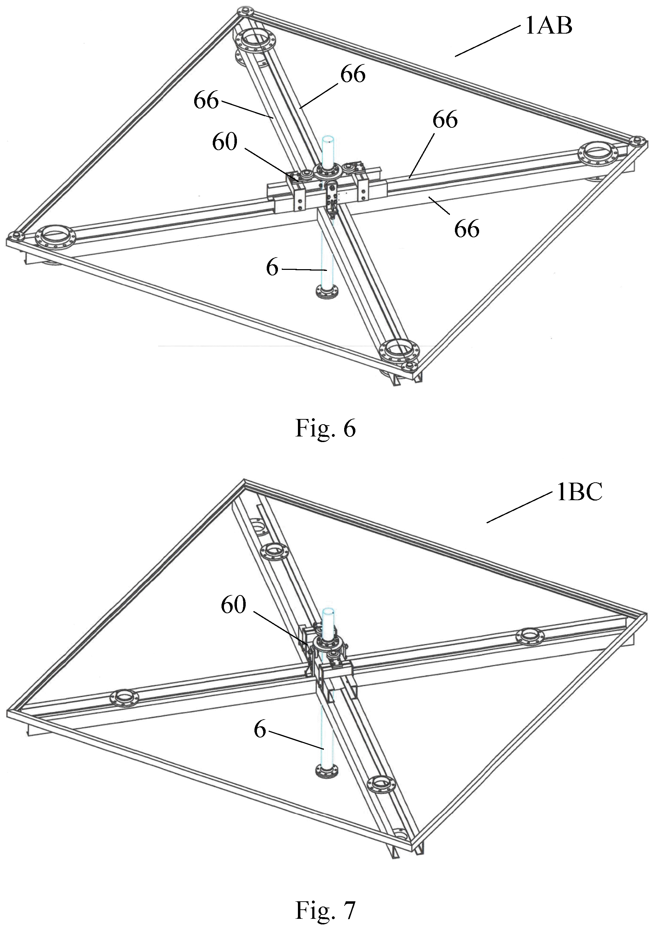

Fig. 1 illustrates a wind turbine. Fig. 2 is a close-up view of an upper section of the wind turbine as seen in Fig. 1. The wind turbine comprises a tower (1) having braced frame structure. The tower (1) comprises five braced frame structure sections: a first braced frame structure section (1A), a second braced frame structure section (1B); a third braced frame structure section (1C), a fourth braced frame structure section (1D) and a fifth braced frame structure section (1E). The first braced frame structure section (1A) and the second braced frame structure (1B) have equal base surfaces so that it is even hard to distinguish where one section ends and the next one starts. However, the base surface of the first braced frame structure section (1A) is greater than the base surfaces of higher braced frame structures (1C; 1D; 1E). Moreover, each higher braced frame structure (1C; 1D; 1E) has smaller base surface than the base surface of the braced frame structure below (1B; 1C; 1D). The progressive reduction in base surface area in higher sections ensures reduced mass and wind-exposed area at elevation, decreasing dynamic loading. Moreover, the tower (1) comprises four shaft support section (1AB; 1BC; 1DE) arranged between the braced frame structure sections (1A; 1B; 1C; 1D; 1E) connecting thereof. The first shaft support section (1AB) is arranged between the first braced frame structure section (1A) and the second braced frame structure section (1B) connecting thereof. The first shaft support section (1AB) is illustrated in more detail in Fig. 6. The second shaft support section (1BC) is arranged between the second braced frame structure section (1B) and the third braced frame structure section (1C) connecting thereof. The second shaft support section (1BC) is illustrated in more detail in Fig. 7. The same is for the fourth shaft support section (1DE) which is arranged between the fourth braced frame structure section (1D) and the fifth braced frame structure section (1E) connecting thereof.

Fig. 1 also illustrates the first braced frame structure section (1A) comprising four subsections (A1 - A4). Each subsection (A1 - A4) comprises four corner beams (18). The second braced frame structure section (1B) comprises three subsections (B1 - B3). Each subsection (B1 - B3) also comprises four corner beams (18). Moreover, the cross-section of the corner beam (18) of the subsection (B1) is greater than the cross-section of the one corner beam (18) of the subsection (B2) positioned above said subsection (B1).

Fig. 2 illustrates the wind turbine comprising a rotor (2) with three blades (3). The rotor (2) is fixed to a horizontal shaft (4). The rotor (2) with the horizontal shaft (4) are positioned onto an upper platform (8). The wind turbine comprises a bevel gear box (5) connected to the horizontal shaft (4) and positioned onto the upper platform (8). The tower (1) comprises a vertical shaft (6) arranged within the tower (1) and connected to the bevel gear box (5) so that the rotation of the horizontal shaft (4) is transferred to the vertical shaft (6), basically changing horizontal rotation into vertical rotation. The vertical shaft (6) itself comprises multiple vertical shaft sections (6s) interconnected to each other forming one single vertical shaft (6). The wind turbine comprises an electric generator (7) connected to the vertical shaft (6). The electric generator (7) is arranged at a base of the tower (1). Hence, the rotation of the rotor (4) is effectively transferred to the electric generator (7) that is arranged at the base of the tower (1). This design where only the rotor (4) and the bevel gear box (5) remain at the top of the tower (1) greatly reduces nacelle mass resulting in decreased gravitational and inertial loads on the tower. At the same time placement of the electric generator (7) at the ground level provides easier servicing and replacement of the electric generator (7). Significantly reduces a need for heavy-lift cranes for high altitude maintenance. Moreover, the electric generator (7) comprises multiple additional units such as clutch, gearbox, brake. All this position at the base level significantly reduces maintenance costs. Synergistically, hazardous work at height is eliminated and downtime is minimized since the electric generator (7) inspection is easier. And further the ground level electric generator (7) can be housed in a temperature-controlled environment improving efficiency and lifespan of electric components. The wind turbine further comprises a cargo elevator (20) arranged along the tower (1) and outside braced frame structure of the tower (1). The cargo elevator (20) comprises a guide (22) connected to the braced frame structure of the tower (1) and a lifting platform (21) mounted to the guide (22) and configured to move along the guide (22) of the cargo elevator (20).

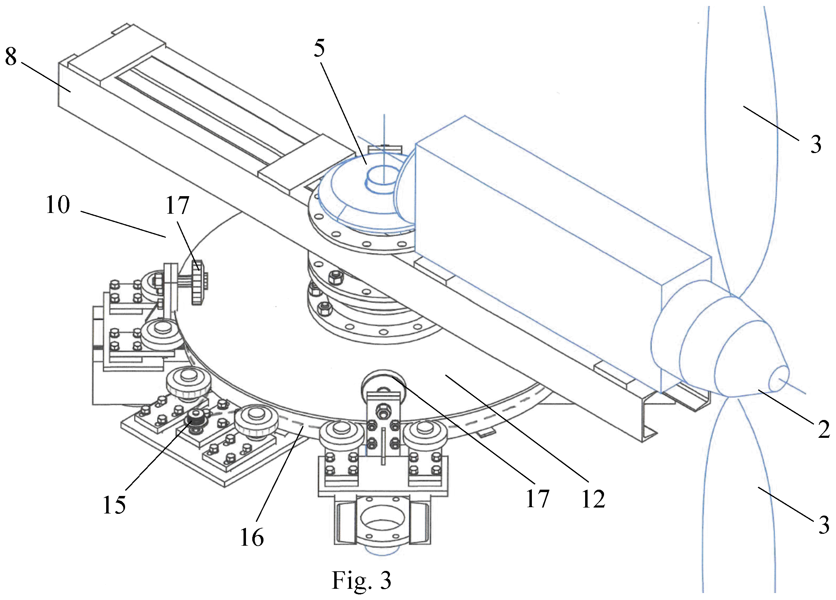

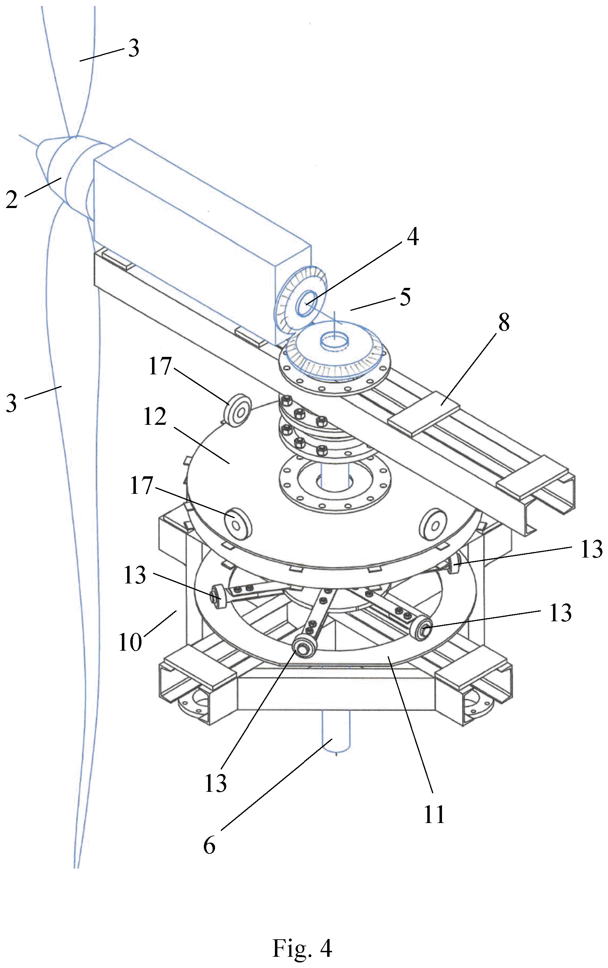

Fig. 3 is a top perspective view of a yaw unit (10). Fig. 4 is an exploded view of the yaw unit (10) as seen in Fig. 3. The yaw unit (10) is configured to orient the rotor (2) towards a wind. The yaw unit (10) comprises a base disc (11) fixed to the tower (1) and a top disc (12) onto which the rotor (2) and the horizontal shaft (4) are positioned. Basically, the rotor (2) and the horizontal shaft (4) are connected to the top disc (12) through the upper platform (8) that is fixed to the top disc (12). The yaw unit (10) comprises six rollers (13) arranged between the base disc (11) and the top disc (12) so that the top disc (12) bears on the rollers (13) and can rotate in relation the base disc (11). The six rollers (13) arranged in equal distances from each other so that the load from the top disc (12) is equally distributed onto the base disc (11) and further to the tower (1) Moreover, rotation axes of the rollers (13) are arranged orthogonal to the rotation axis of the top disc (12). The yaw unit (10) comprises a top disc drive unit (15) with a power transmission unit (16) such as a chain. The power transmission unit (16) is arranged around the top disc (12) so that the power transmission unit (16) is engaged with the top disc (12) and the power transmission unit (16) is also engaged with the top disc drive unit (15) so that the top disc drive unit (15) rotates the top disc (12) through the movement of the power transmission unit (16) in result of which the rotor (2) can be oriented towards the wind. The yaw unit (10) further comprises four press rollers (17) arranged above the top disc (12) so that the press rollers (17) press the top disc (12) towards the base disc (11).

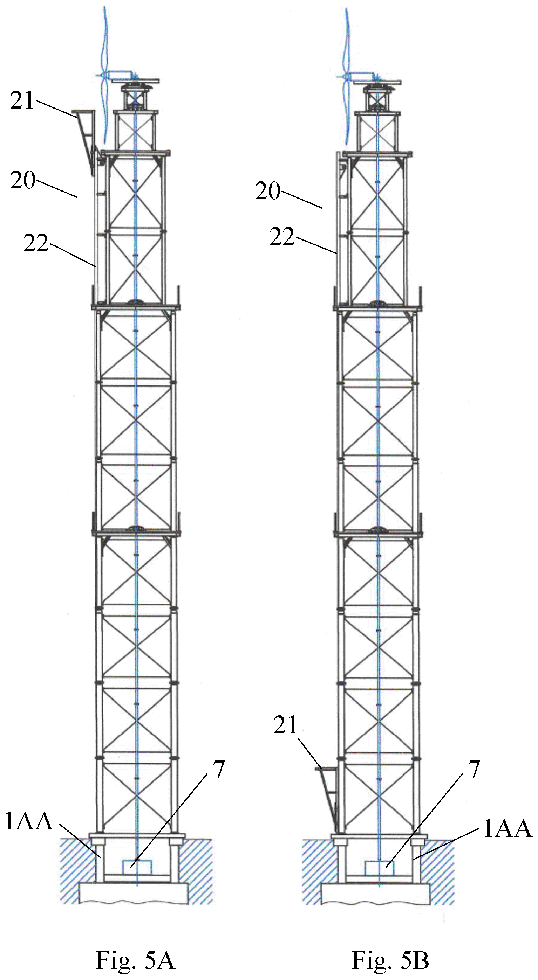

Fig. 5A illustrates a wind turbine with the electric generator (7) arranged in a basement (1AA). Fig. 5B illustrates a wind turbine as seen in Fig. 5A, but with a lifting platform (21) of a cargo elevator (20) in a lowered position.

Fig. 6 illustrates a first shaft support section (1AB) arranged between a first braced frame structure section (1A) and a second braced frame structure section (1B).

Fig. 7 illustrates a shaft support section (1BC) arranged between the second braced frame structure section (1B) and a third braced frame structure section (1C).

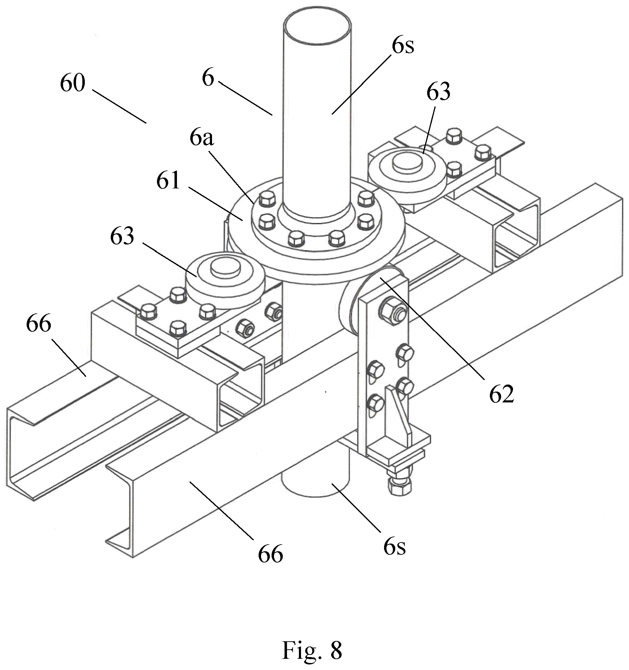

Fig. 8 illustrates a shaft support device (60) arranged on two cross beams (66) of the shaft support section (1AB). The shaft support device (60) comprises two shaft support rollers (62) arranged under the shaft disc (61) so that the shaft support rollers (62) support the shaft disc (61) and provides rotational movement between the shaft support disc (61) and shaft support rollers (62). The shaft support device (60) further comprises two shaft side support rollers (63) arranged at the outer circumference of the shaft support disc (61) so that the side support rollers (63) restrict movement of the shaft support disc (61) orthogonally to the longitudinal axis of the shaft support disc (61).

While the invention may be susceptible to various modifications and alternative forms, specific embodiments of which have been shown by way of example in the figures and have been described in detail herein, it should be understood that the invention is not intended to be limited to the particular forms disclosed. Rather, the invention is defined by the following claims.

## Claims

1. A wind turbine comprising:
- a tower (1) having braced frame structure, wherein the tower (1) has multiple braced frame structure sections (1A; 1B; 1C; 1D; 1E) comprising a lower section (1A), multiple middle sections (1B; 1C; 1D) and an upper section (1E);
- a rotor (2) with blades (3);
- a horizontal shaft (4) connected to the rotor (2);
- a bevel gear box (5) connected to the horizontal shaft (4);
- a vertical shaft (6) connected to the bevel gear box (5) so that the rotation of the horizontal shaft (4) is transferred to the vertical shaft (6);
- an electric generator (7) connected to the vertical shaft (6), wherein the electric generator (7) is arranged at the lower section (1) of the tower (1) or at a base of the tower (1), or below the base of the tower (1);
- a yaw unit (10) configured to orient the rotor (2) towards a wind, wherein the yaw unit (10) comprises:
- a base disc (11) fixed to the tower (1);
- a top disc (12) onto which the rotor (2) and the bevel gear box (5) are positioned;
- multiple rollers (13) arranged between the base disc (11) and the top disc (12) so that the top disc (12) bears on the rollers (13) and can rotate in relation the base disc (11);
- a top disc drive unit (15) with a power transmission element (16), wherein the power transmission element (16) is engaged with the top disc (12) so that the top disc drive unit (15) rotates the top disc (12) through the movement of the power transmission element (16) in result of which the rotor (2) can be oriented towards the wind;
- a cargo elevator (20) arranged along entire length of the tower (1) and outside braced frame structure sections (1A; 1B; 1C; 1D; 1E) of the tower (1).

2. The wind turbine according to claim 1, wherein a base surface of a lower braced frame structure section (1A; 1B; 1C; 1D) is greater than a base surface of an upper braced frame structure (1B;1C; 1D; 1E) so that a surface is left on the lower braced frame structure section (1A; 1B; 1C; 1D) around the upper braced frame structure section (1B;1C; 1D; 1E) for repairmen to walk around and service the wind turbine.

3. The wind turbine according to claim 1 or 2, wherein the vertical shaft (6) comprises multiple vertical shaft sections (6s) interconnected to each other through shaft end connection flanges (6a) forming one single vertical shaft (6), wherein a shaft support disc (61) is arranged between the interconnected shaft end connection flanges (6a) of the vertical shaft sections (6s).

4. The wind turbine according to any one of claim 1 to 3, wherein the braced frame structure section (1A; 1B; 1C) comprises at least two interconnected subsections (A1 - A4; B1 - B3; C1 - C2), and wherein each subsection (A1 - A4; B1 - B3; C1 - C2) comprises at least four corner support beams (18).

5. The wind turbine according to any one of claim 1 to 4, wherein a cross-section of one corner support beam (18) of the subsection (B1 - B3; C1 - C2) is smaller than the cross-section of the one corner support beam (18) of the subsection (A1 - A4; B1 - B3) positioned below said subsection (B1 - B3; C1 - C2).

6. The wind turbine according to any one of claim 1 to 5, wherein the yaw unit (10) comprises six rollers (13) arranged in equal distances from each other around the base disc (11) so that the load from the top disc (12) is equally distributed onto the base disc (11) and further to the tower (1).

7. The wind turbine according to any one of claim 1 to 6, wherein rotation axes of the rollers (13) are arranged orthogonal to the rotation axis of the top disc (12).

8. The wind turbine according to any one of claim 1 to 7, wherein the yaw unit (10) comprises a set of press rollers (17) arranged above the top disc (12) so that the press rollers (17) press the top disc (12) towards the rollers (13) and the base disc (11).

9. The wind turbine according to any one of claim 1 to 8, wherein it comprises a shaft support section (1AB; 1BC; 1DE) arranged between two braced frame structure sections (1A; 1B; 1C; 1D; 1E) connecting thereof.

10. The wind turbine according to claim 9, wherein the shaft support section (1AB; 1BC; 1DE) comprises a shaft support device (60) positioned on cross beams (66) of the shaft support section (1AB; 1BC; 1DE), wherein the shaft support device (60) comprises:
- at least two shaft support rollers (62) arranged under the shaft support disc (61); and
- at least two shaft side support rollers (63) arranged at the outer circumference of the shaft support disc (61) so that the side support rollers (63) restrict movement of the shaft support disc (61) orthogonally to the longitudinal axis of the shaft disc (61).
